# EUROPÄISCHE PATENTSCHRIFT

(11) **EP 2 664 015 B1**
(45) Veröffentlichungstag und Bekanntmachung des Hinweises auf die Patenterteilung: **17.07.2019**
(21) Anmeldenummer: 11788405.6
(22) Anmeldetag: 14.11.2011
(51) Int. Cl.: H01M 2/04, H01M 2/12

(54) **BATTERIEZELLENMODUL, VERFAHREN ZUR HERSTELLUNG EINES BATTERIEZELLENMODULS SOWIE BATTERIE UND KRAFTFAHRZEUG**
BATTERY CELL MODULE, METHOD FOR PRODUCING A BATTERY CELL MODULE, BATTERY AND MOTOR VEHICLE
MODULE D'ÉLÉMENTS DE BATTERIE, PROCÉDÉ DE PRODUCTION D'UN MODULE D'ÉLÉMENTS DE BATTERIE, ET BATTERIE ET VÉHICULE À MOTEUR CORRESPONDANTS

(30) Priorität: 13.01.2011 DE 102011002631
(43) Veröffentlichungstag der Anmeldung: 20.11.2013
(73) Patentinhaber: Samsung SDI Co., Ltd., Gyeonggi-do (KR); Robert Bosch GmbH, 70442 Stuttgart (DE)
(72) Erfinder: GENDLIN, Boris, 70794 Filderstadt (DE); GLESS, Michael, 70437 Stuttgart-Zazenhausen (DE); ANGERBAUER, Ralf, 71696 Möglingen (DE); BUBECK, Conrad, 73728 Esslingen (DE); BAUMANN, Stefan, 72657 Altenriet (DE); RUEHLE, Andreas, 70374 Stuttgart (DE)
(74) Vertreter: Bee, Joachim
(86) Internationale Anmeldenummer: PCT/EP2011/069999
(87) Internationale Veröffentlichungsnummer: WO 2012/095201

(56) Entgegenhaltungen:
- WO-A1-2010/067602
- CH-A- 305 227
- US-A- 5 281 492
- US-A- 5 856 037

## Beschreibung

Die vorliegende Erfindung betrifft ein Batteriezellenmodul, welches eine Mehrzahl von Batteriezellen, insbesondere Lithium-Ionen-Batteriezellen, umfasst, wobei die Batteriezellen jeweils eine Entgasungsöffnung aufweisen. Das Batteriezellenmodul umfasst weiterhin einen Gasaufnahmeraum zur Aufnahme von aus den Batteriezellen entwichenem Gas. Außerdem betrifft die vorliegende Erfindung ein Montageverfahren zur Herstellung eines erfindungsgemäßen Batteriezellenmoduls, sowie eine Batterie, die mehrere der erfindungsgemäßen Batteriezellenmodule aufweist, und ein Kraftfahrzeug.

### Stand der Technik

Batteriezellen und insbesondere Lithium-Ionen-Batteriezellen weisen oftmals eine so genannte Entgasungsöffnung auf, die die Entstehung eines unzulässigen Überdrucks im Inneren der Batteriezelle dadurch vermeidet, dass sie ab einem bestimmten Innendruck das Gehäuse öffnet, so dass Gase aus dem Batteriezellengehäuse in die Umgebung entweichen können. Derartige Entgasungsöffnungen können dabei als Sollbruchstelle ausgestaltet sein. Die austretenden Gase enthalten Elektrolyt und reagieren mit Wasser zu Flusssäure. Um Gefahren für Aggregate und Personen zu vermeiden, ist es notwendig, dass das aus den Batteriezellen ausgetretene Gas kontrolliert und gezielt abgeführt wird.

Das Auffangen und Abführen übernimmt oftmals ein so genannter Moduldeckel, der auf dem Batteriezellenmodul angeordnet ist.

Die DE 20 2004 004 335 U1 offenbart in diesem Zusammenhang ein Entgasungssystem für Akkumulatoren, bei dem entwichenes Gas durch ein Labyrinth strömen muss, um Feststoffe und Flüssigkeiten abzuscheiden, bevor das Gas in eine so genannte Gasaustrittskammer im Deckel gelangt. Diese Ausgestaltung ist mit einem relativ hohen konstruktiven und demzufolge auch fertigungstechnischen Aufwand verbunden.

Die DE 102 57 918 B4 offenbart einen Akkumulator, auf dem ein so genannter Blockdeckel angeordnet ist, der wiederum einen Ober- und einen Unterdeckel aufweist. In dem Blockdeckel sind, der Anzahl der Batteriezellen entsprechend, jeweils Gasräume zur Säureabscheidung angeordnet. Auch diese Ausführungsform eines Gas aufnehmenden Deckels ist, bedingt durch die konstruktive Ausführung, bei der Fertigung und Montage insbesondere bei hohen Stückzahlen relativ aufwendig und kostenintensiv.

Die WO 2010/067602 (in englischer Sprache publiziert als EP 2357688 A1) offenbart ein Batteriemodul umfassend eine Vielzahl von Batterieeinheiten, ein Gehäuse, eine Verdrahtungsplatte und einen Deckel. Die Batterieeinheit besteht aus einer oder mehreren Batteriezellen, die jeweils einen Entlüftungsmechanismus aufweisen. Mindestens eine Oberfläche des Gehäuses weist ein offenes Ende auf. Das Gehäuse weist eine Vielzahl von Unterteilungen auf, die durch eine oder mehrere Trennwände voneinander getrennt sind. Jede Batterieeinheit ist in einem Aufbewahrungsteil untergebracht. Die Verdrahtungsplatine deckt das offene Ende des Gehäuses ab, ist auf der Seite des Entlüftungsmechanismus der Zelle angeordnet und hat Verbindungsanschlüsse, die mit den Batterieeinheiten verbunden sind. Die US 5,856,037 offenbart ein Batterieentlüftungssystem. Dessen Entlüftungsmechanismus umfasst eine Batterieentlüftungsstruktur, die sich an der Batterieabdeckung befindet und damit einstückig ausgebildet sein kann. Der Entlüftungsmechanismus umfasst eine Öffnung, die sich durch die Batterieabdeckung erstreckt, so dass die Öffnung mit einer Vielzahl von Batteriezellen in Verbindung steht, die sich innerhalb des Batteriegehäuses befinden. Der Belüftungsmechanismus umfasst auch einen Belüftungsverteiler, der an der Batteriebelüftungsstruktur befestigt ist. Der Belüftungsverteiler umfasst eine erste Öffnung, die mit der Öffnung der Batterieentlüftungsstruktur kommuniziert, und zweite und dritte Öffnungen, die es ermöglichen, dass der Belüftungsverteiler mit zwei separaten Leitungen verbunden ist. Auf diese Weise können mehrere Batterien zu Entlüftungszwecken miteinander verbunden werden, so dass keine separaten Entlüftungsleitungen für jede Batterie vorgesehen werden müssen. Der Belüftungsverteiler kann durch eine Reibschweißtechnik an der Batterieentlüftungsstruktur befestigt sein.

### Offenbarung der Erfindung

Erfindungsgemäß wird ein Batteriezellenmodul, welches eine Mehrzahl von Batteriezellen, insbesondere Lithium-Ionen-Batteriezellen, umfasst, zur Verfügung gestellt, wobei die Batteriezellen jeweils eine Entgasungsöffnung aufweisen. Das Batteriezellenmodul umfasst weiterhin einen mit jeweils einer Fläche der Batteriezellen im Wesentlichen abdichtend verbundenen Deckel, der einen Gasaufnahmeraum zur zumindest temporären Aufnahme von aus den Batteriezellen entwichenem Gas aufweist, wobei der Gasaufnahmeraum in Richtung der Batteriezellen geöffnet ist.

Dabei erstreckt sich der Öffnungsbereich des Gasaufnahmeraums über mehrere Batteriezellen. Erfindungsgemäss sind die Batteriezellen aneinander lediglich mittels Spannbändern positioniert und fixiert. Die Abdichtung des Deckels gegenüber den Flächen der Batteriezellen ist vorzugsweise vollständig realisiert, das heißt, wenigstens fluiddicht und in bevorzugter Ausführungsform vollständig gasdicht. Der Deckel liegt abdichtend an mehreren Batteriezellen an, wobei derselbe Öffnungsbereich über mehreren Batteriezellen angeordnet ist, so dass das aus diesen mehreren Batteriezellen ausweichende Gas durch denselben Öffnungsbereich in den Gasaufnahmeraum des Deckels gelangen kann. Die Abdichtung erfolgt dabei durch ein zweckmäßiges Dichtungselement am Deckel und/oder an den Batteriezellen, wie zum Beispiel durch eine Moosgummidichtung. Die Flächen der Batteriezellen, an denen der Deckel anliegt, sind vorzugsweise die jeweiligen Deckflächen der Batteriezellen, aus denen die Terminals herausragen.

Der Vorteil des erfindungsgemäßen Batteriezellenmoduls liegt insbesondere darin, dass der Gasaufnahmeraum einen relativ großen Öffnungsbereich aufweist, der mehrere Batteriezellen und deren Entgasungsöffnungen überdeckt, so dass das aus diesen Batteriezellen entweichende Gas problemlos durch den relativ großen Öffnungsbereich in den Gasaufnahmeraum gelangen kann. Es sind somit nicht mehr einzelne Kanäle zur Leitung des aus den Batteriezellen entströmenden Gases in den Gasaufnahmeraum erforderlich, so dass insbesondere der Deckel des Batteriezellenmoduls in einfacher und kostengünstiger Weise hergestellt und montiert werden kann.

Vorzugsweise ist vorgesehen, dass der Deckel einwandig ausgebildet ist, wobei der Gasaufnahmeraum im Deckel durch eine bereichsweise im Wesentlichen konkave Ausgestaltung ausgebildet ist. Insbesondere ein solcher Deckel ist fertigungstechnisch sehr einfach zu realisieren. Die Erfindung ist dabei nicht auf die einwandige Ausgestaltung des Deckels beschränkt, sondern es kann der Deckel auch derart ausgestaltet sein, dass er aus mehreren Schichten aufgebaut ist. Auch ein solcher mehrschichtiger Deckel weist das erfindungsgemäße Merkmal auf, dass der durch den Deckel ausgebildete Gasaufnahmeraum in Richtung der Batteriezellen offen ist, so dass aus den Batteriezellen ausgetretenes Gas ungehindert in den Gasaufnahmeraum über den Batteriezellen gelangen kann und dort zunächst gesammelt und dann abgeführt werden kann.

Unter der erwähnten konkaven Ausgestaltung ist auch eine eckige Raumbegrenzung zu verstehen, die im Wesentlichen eine Raumausbildung in die von den Batteriezellen abgewandte Richtung aufweist. Diese konkave Ausgestaltung kann durch Umformung eines einschichtigen Deckelmaterials realisiert sein oder auch durch eine Herausarbeitung von Vollmaterial aus dem Deckelmaterial, so dass sich der Gasaufnahmeraum im Deckel-Vollmaterial herausbildet.

Vorzugsweise ist vorgesehen, dass die von dem Öffnungsbereich überdeckte Fläche dem Bereich der Projektion des Gasaufnahmeraums auf die vom Deckel überlagerten Flächen der Batteriezellen entspricht. Mit der Projektion ist dabei eine senkrechte Projektion auf die vom Deckel überlagerten Flächen gemeint. Das heißt, dass die maximale Breite und Länge des Gasaufnahmeraums im Wesentlichen die Fläche der Öffnung des Gasaufnahmeraums in Richtung der Batteriezellen definiert. Mit anderen Worten ist die maximale Querschnittsfläche des Gasaufnahmeraums die des Öffnungsbereichs. Die Erfindung ist jedoch nicht auf eine derartige Ausgestaltung eingeschränkt, sondern es kann das erfindungsgemäße Batteriezellenmodul auch derart ausgebildet sein, dass die von dem Öffnungsbereich abgedeckte Fläche der Batteriezellen kleiner ist als der Bereich der Projektion des Gasaufnahmeraums auf die vom Deckel abgedichteten Flächen.

Zur Ableitung des im Gasaufnahmeraum aufgenommenen Gases ist vorgesehen, dass dieser wenigstens eine Auslassöffnung aufweist. Aus der Auslassöffnung ist in bevorzugter Ausgestaltung eine Anschlusseinrichtung zum Anschluss einer Leitung, wie zum Beispiel eines Schlauches, vorgesehen, um das entwichene Gas vom Batteriezellenmodul wegzutransportieren und gezielt dort in die Umgebung zu entlassen, wo keine Gefährdung durch das Gas besteht. Die Anschlusseinrichtung kann zum Beispiel in Form eines T-Rohrstückes vorliegen, dessen beide gleichgerichteten Rohrstutzen zum Anschluss jeweils eines Schlauches ausgebildet sind, so dass mehrere Anschlusseinrichtungen in einfacher Weise in Reihe miteinander verbunden werden können, wodurch der Aufwand zur Abführung der Gase aus mehreren Batteriezellen verringert wird.

Im Fall eines Überdrucks in einer Batteriezelle öffnet sich deren Entgasungsöffnung, so dass Gas aus der Batteriezelle in den Gasaufnahmeraum gelangt. Dieser Überdruck bewirkt, dass das Gas nach Aufnahme im Gasaufnahmeraum durch die Anschlusseinrichtung von der Batteriezelle wegtransportiert wird.

Zur Realisierung einer einfachen und wirkungsvollen Abdichtung ist vorzugsweise vorgesehen, dass die Batteriezellen aneinander anliegen oder dass zwischen den Batteriezellen Zwischenschichten angeordnet sind, so dass in dem Bereich der Batteriezellen, an dem dichtend der Deckel anliegt, eine im Wesentlichen ununterbrochene Oberfläche des Batteriezellenmoduls ausgebildet ist. Das heißt, dass es keine Abstände zwischen den Batteriezellen gibt, die nicht mit festem und abdichtbarem Material ausgefüllt sind, so dass eine Abdichtung des mehrere Batteriezellen überbrückenden Gasaufnahmeraumes bzw. seines Öffnungsbereiches gegenüber den Batteriezellen erfolgen kann. Durch diese erfindungsgemäße Ausgestaltung ist es nicht mehr notwendig, die Batteriezellen eines Moduls in einem extra Gehäuse anzuordnen, da durch die Ausgestaltung mit einer ununterbrochenen Oberfläche die Abdichtung des nach unten offenen Gasaufnahmeraums möglich ist.

Dadurch, dass erfindungsgemäß das Batteriezellenmodul kein Gehäuse mehr aufweisen muss, werden ebenfalls fertigungstechnische Vorteile erzielt sowie eine Gewichtsreduktion realisiert.

In vorteilhafter Ausgestaltung des erfindungsgemäßen Batteriezellenmoduls ist vorgesehen, dass der Deckel eine Mehrzahl von Löchern aufweist, durch die Terminals der Batteriezellen hindurchgeführt sind. Diese Löcher sind selbstverständlich außerhalb des Gasaufnahmeraumes angeordnet.

In weiterer bevorzugter Ausgestaltung ist vorgesehen, dass an der den Batteriezellen abgewandten Seite des Deckels und zwischen Löchern Profilelemente angeordnet sind, die eine Profilierung des Deckels zwischen benachbarten Löchern bewirken. Diese Profilelemente können zum Beispiel so genannte Trennstege sein, die die Deckeloberfläche derart profilieren, dass ein im Wesentlichen zweidimensional ausgestalteter Zellverbinder nicht mehr bestimmte Terminals miteinander verbinden kann, die durch zwei benachbarte Löcher, zwischen denen sich das Profilelement befindet, führen, oder dass zumindest bei einer Verbindung dieser Terminals mit dem Zellverbinder dieser in der Umgebung der Löcher nicht auf der Deckeloberfläche flach aufliegen kann, da er durch das Profilelement von der Deckeloberfläche beabstandet wird. Dadurch wird einem Monteur ein einfaches und effizientes Mittel der Verhinderung von Montagefehlern hinsichtlich der Positionierung und Verbindung von Terminals und elektrischer Schaltung der Batteriezellen an die Hand gegeben, da durch die Profilelemente die Verbindung von Terminals, die einander nicht kontaktieren sollen, unmöglich gemacht oder zumindest erschwert wird. Das heißt, dass durch die Ausgestaltung des Deckels mit den Profilelementen ein so genannter Poka-Yoke-Effekt realisiert wird. Die Anzahl der Löcher im Deckel entspricht vorzugsweise der Anzahl der miteinander zu kontaktierenden Terminals der Batteriezellen des Batteriezellenmoduls.

Das erfindungsgemäße Batteriezellenmodul ist weiterhin dann montage- und fertigungstechnisch günstig ausgestaltet, wenn das Batteriezellenmodul eine Mehrzahl von Zellverbindern umfasst, die Terminals von jeweils zwei Batteriezellen miteinander verbinden, wobei der Deckel zwischen den Zellverbindern und Gehäusen der Batteriezellen angeordnet ist. Das heißt, dass in diesem Falle der Aufbau des Batteriezellenmoduls derart realisiert ist, dass der Deckel auf den Batteriezellen bzw. deren Gehäusen angeordnet ist und auf diesem Deckel wiederum die Zellverbinder angeordnet sind, die Terminals der Batteriezellen verbinden, die durch Löcher im Deckel hindurchragen.

Erfindungsgemäß wird außerdem ein Verfahren zur Herstellung eines Batteriezellenmoduls in der letztgenannten Ausführungsform zur Verfügung gestellt, bei dem ein Deckel auf die Seite von mehreren zu einem Block zusammengefassten Batteriezellen im Wesentlichen abdichtend aufgesetzt wird, an der sich die Terminals der Batteriezellen befinden, so dass Terminals der Batteriezellen durch Löcher im Deckel hindurchführen und danach Terminals der Batteriezellen mit Zellverbindern verbunden werden. Dabei ist die Seite der Batteriezellen, an denen sich die Terminals der Batteriezellen befinden, auch die Seite, an der sich die Entgasungsöffnungen der Batteriezellen befinden. Bei Ausgestaltung des Batteriezellenmoduls mit den Profilelementen können nur Terminals durch die Zellverbinder miteinander verbunden werden, zwischen denen kein Profilelement angeordnet ist, wodurch eine Fehl-Schaltung der einzelnen Batteriezellen verhindert wird.

Es wird außerdem erfindungsgemäß eine Batterie, insbesondere eine Lithium-Ionen-Batterie, zur Verfügung gestellt, die mehrere der erfindungsgemäßen Batteriezellenmodule umfasst, wobei die Batteriezellenmodule in einem Gesamtgehäuse angeordnet sind und Auslassöffnungen der Batteriezellenmodule strömungstechnisch mit einer Entgasungsleitung verbunden sind, die an einen Gasauslass im Gesamtgehäuse angeschlossen ist. Das heißt, dass nicht jedes einzelne Batteriezellenmodul ein Gehäuse aufweist, sondern dass die Batteriezellenmodule in einem alle Batteriezellenmodule umfassenden Gesamtgehäuse angeordnet sind. Die jeweiligen Auslassöffnungen, die an die Gasaufnahmeräume der Batteriezellenmodule angeschlossen sind, sind strömungstechnisch mit wenigstens einer Entgasungsleitung verbunden, durch die das aus den Batteriezellen entwichene Gas transportiert werden kann, bis es aus einem Gasauslass, welcher im Gesamtgehäuse angeordnet ist, gezielt und kontrolliert in die Umgebung abgegeben werden kann.

Erfindungsgemäß wird außerdem ein Kraftfahrzeug, insbesondere ein elektromotorisch angetriebenes Kraftfahrzeug zur Verfügung gestellt, welches wenigstens ein erfindungsgemäßes Batteriezellenmodul oder eine erfindungsgemäße Batterie aufweist, wobei das Batteriezellenmodul bzw. die Batterie mit einem Antriebssystem des Kraftfahrzeuges verbunden ist.

Durch die erfindungsgemäße Konstruktion des Batteriezellenmoduls sowie auch der Batterie ist ein sicheres Auffangen und Ableiten der in den Batteriezellen gegebenenfalls entstandenen Gase realisierbar. Dabei sind das erfindungemäße Batteriezellenmodul sowie auch die Batterie fertigungstechnisch und montagetechnisch einfach und mit erhöhter Sicherheit gegen Montagefehler herstellbar.

### Zeichnungen

Die Erfindung wird im Folgenden anhand der in den beiliegenden Zeichnungen dargestellten Ausführungsbeispiele erläutert. Es zeigen dabei:
Figur 1 eine Batteriezelle in perspektivischer Ansicht,
Figur 2 einen Deckel in Ansicht von oben,
Figur 3 einen Deckel in Ansicht von unten,
Figur 4 ein erfindungsgemäßes Batteriezellenmodul in perspektivischer Ansicht, und
Figur 5 ein erfindungsgemäßes Batteriezellenmodul in Ansicht von der Seite.

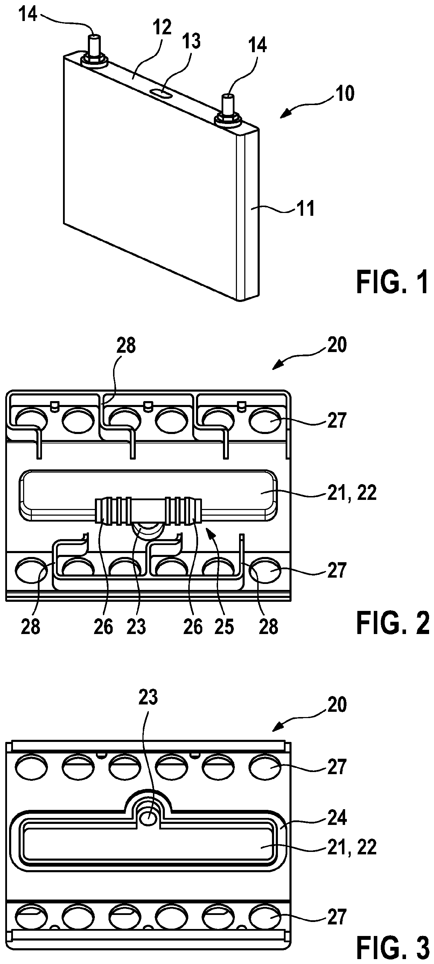

In Figur 1 ist die bevorzugt im erfindungsgemäßen Batteriezellenmodul verwendete Batteriezelle 10 dargestellt. Diese Batteriezelle 10 umfasst ein Batteriezellengehäuse 11, an dessen Oberseite, an der auch die Terminals 14 angeordnet sind, die vom Öffnungsbereich des Deckels 20 abgedeckte Fläche 12 angeordnet ist. In dieser Fläche 12 befindet sich auch die Entgasungsöffnung 13, die zum Beispiel als eine Sollbruchstelle oder als ein Überlastventil ausgestaltet sein kann, um im Fall eines unzulässigen Überdrucks in der Batteriezelle 10 Gas aus dem Batteriezellengehäuse 11 herauszulassen.

In den Figuren 2 und 3 ist ein Deckel 20 des erfindungemäßen Batteriezellenmoduls dargestellt. Es ist ersichtlich, dass dieser Deckel 20 ein im Wesentlichen rechteckiges Format hat, wobei im zentralen Bereich der Gasaufnahmeraum 21, hier ausgebildet als eine konkave Wölbung des einschichtigen Deckelmaterials, angeordnet ist. Insbesondere aus Figur 3 ist dabei ersichtlich, dass der Gasaufnahmeraum 21 nach unten offen ist, so dass sich ein Öffnungsbereich 22, der die Kontur des Gasaufnahmeraumes 21 aufweist, ausbildet. Ebenfalls aus Figur 3 ist deutlich ersichtlich, dass sich an den Gasaufnahmeraum 21 eine Auslassöffnung 23 anschließt. An dieser Auslassöffnung 23 ist, wie aus Figur 2 ersichtlich, eine rohrförmige Anschlusseinrichtung 25 angeschlossen, die als T-Stück ausgebildet ist. Diese Anschlusseinrichtung 25 weist zwei voneinander wegweisende Rohrstutzen 26 zum Anschluss weiterer Verbindungsleitungen auf.

Wie in Figur 3 dargestellt, ist am Deckel 20 ein den Öffnungsbereich 22 umrandendes Dichtungselement 24 angeordnet.

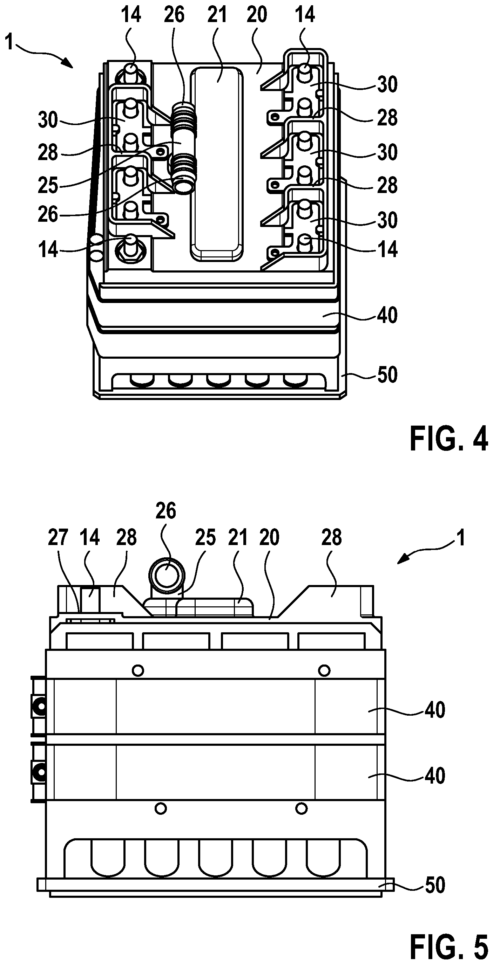

Bei einer Anordnung des Deckels 20 auf einer Mehrzahl von Batteriezellen 10, wie sie in Figur 4 an den herausragenden Terminals 14 erkennbar sind, überlagert der Gasaufnahmeraum 21 und damit auch der Öffnungsbereich 22 die Batteriezellen 10 quer, so dass der Gasaufnahmeraum 21 und der Öffnungsbereich 22 im Wesentlichen über den in Figur 1 dargestellten Entgasungsöffnungen 13 der Batteriezellen 10 verläuft. Bei Öffnung einer Entgasungsöffnung 13 gelangt das Gas durch den Öffnungsbereich 22 in den Gasaufnahmeraum 21. Eine seitliche Ausströmung des Gases wird durch die Abdichtung mittels des Dichtungselementes 24 verhindert. Durch Ausbildung einer ebenen Oberfläche des Batteriezellenmoduls unter dem Öffnungsbereich 22 wird die Dichtungswirkung durch das Dichtungselement 24 verbessert.

Das im Gasaufnahmeraum 21 aufgenommene Gas kann durch die in Figur 3 erkennbare Auslassöffnung 23 in die Anschlusseinrichtung 25 und in deren Rohrstutzen 26 gelangen, so dass das Gas durch nicht dargestellte Leitungen an diesen Rohrstutzen 26 vom Batteriezellenmodul 1 wegtransportiert werden kann. Der Volumenstrom des Gases erfolgt auf Grund des relativ großen Überdrucks des entweichenden Gases.

In den Figuren 2 und 3 ist außerdem erkennbar, dass der Deckel 20 eine Vielzahl von auf jeder Seite angeordneten Löchern 27 aufweist. Die Anzahl der Löcher entspricht der Anzahl der Terminals 14 der schaltungstechnisch zu verbindenden Batteriezellen 10. Aus Figur 4 ist ersichtlich, dass die Terminals 14 durch die Löcher 27 hindurchragen. Dabei sind zwischen den verschiedenen Löchern 27 bzw. Terminals 14 Profilelemente 28 in Form von so genannten Trennstegen angeordnet, die verhindern, dass Zellverbinder 30 mit Terminals 14 verbunden werden, mit denen konstruktiv jedoch gar keine elektrische Verbindung vorgesehen ist. Das heißt, dass die Zellverbinder 30 durch die Anordnung der Profilelemente 28 nur die Terminals 14 miteinander verbinden, mit denen schaltungstechnisch überhaupt eine elektrische Kontaktierung vorgesehen ist. Somit lassen sich Fehler bei manueller oder automatisierter Montage vermeiden.

In Figur 5 ist ein erfindungsgemäßes Batteriezellenmodul 1 in Ansicht von der Seite dargestellt, wobei deutlich die Ausbildung des Rohrstutzens 26 zum Anschluss einer Entgasungsleitung sowie die konkave Wölbung des Gasaufnahmeraumes 21 erkennbar sind. Weiterhin ist ersichtlich, dass die Profilelemente 28 höher als die Terminals 14 bei Auflage des Deckels 20 auf den Batteriezellen 10 angeordnet sind, so dass eine fehlerhafte Verbindung von Terminals 14 durch Zellverbinder 30 vermieden wird.

Aus Figur 5 ist erkennbar, dass das erfindungsgemäße Batteriezellenmodul kein extra Gehäuse aufweisen muss, um eine abdichtende Anordnung des Deckels 20 auf den Batteriezellen 10 zu erreichen. Zur Positionierung und Fixierung der Batteriezellen 10 aneinander werden erfindungsgemäss lediglich Spannbänder 40 verwendet. Diese Spannbänder 40 fassen die Batteriezellen 10 zu einem Modul zusammen, welches auf einer Grundplatte 50 angeordnet ist.

## Patentansprüche

1. Batteriezellenmodul, welches eine Mehrzahl von Batteriezellen (10), insbesondere Lithium-Ionen-Batteriezellen, die jeweils eine Entgasungsöffnung (13) aufweisen, sowie einen mit jeweils einer Fläche der Batteriezellen (10) im Wesentlichen abdichtend verbundenen Deckel (20) umfasst, der einen Gasaufnahmeraum (21) zur zumindest temporären Aufnahme von aus den Batteriezellen (10) entwichenem Gas aufweist, wobei der Gasaufnahmeraum (21) in Richtung der Batteriezellen (10) geöffnet ist, wobei
sich der Öffnungsbereich (22) des Gasaufnahmeraumes (21) über mehrere Batteriezellen (10) erstreckt, **dadurch gekennzeichnet, dass** die Batteriezellen (10) aneinander lediglich mittels Spannbändern (40) positioniert und fixiert sind.

2. Batteriezellenmodul nach Anspruch 1, bei dem der Deckel (20) einwandig ausgebildet ist, wobei der Gasaufnahmeraum (21) im Deckel (20) durch eine bereichsweise im Wesentlichen konkave Ausgestaltung ausgebildet ist.

3. Batteriezellenmodul nach einem der Ansprüche 1 und 2, bei dem die von dem Öffnungsbereich (22) überdeckte Fläche dem Bereich der Projektion des Gasaufnahmeraums (21) auf die vom Deckel (20) überlagerten Flächen der Batteriezellen (10) entspricht.

4. Batteriezellenmodul nach einem der vorhergehenden Ansprüche, bei dem der Gasaufnahmeraum (21) eine Auslassöffnung (23) zur Ableitung des aufgenommenen Gases aufweist.

5. Batteriezellenmodul nach einem der vorhergehenden Ansprüche, bei dem die Batteriezellen (10) aneinander anliegen oder zwischen den Batteriezellen (10) Zwischenschichten angeordnet sind, so dass in dem Bereich der Batteriezellen (10), an dem dichtend der Deckel (20) anliegt, eine im Wesentlichen ununterbrochene Oberfläche des Batteriezellenmoduls (1) ausgebildet ist.

6. Batteriezellenmodul nach einem der vorhergehenden Ansprüche, bei dem der Deckel (20) eine Mehrzahl von Löchern (27) aufweist, durch die Terminals (14) der Batteriezellen (10) hindurchgeführt sind, und an der den Batteriezellen (10) abgewandten Seite des Deckels (20) und zwischen Löchern (27) Profilelemente (28) angeordnet sind, die eine Profilierung des Deckels (20) zwischen benachbarten Löchern (27) bewirken.

7. Batteriezellenmodul nach Anspruch 6, bei dem das Batteriezellenmodul (1) eine Mehrzahl von Zellverbindern (30) umfasst, die Terminals (14) von jeweils zwei Batteriezellen (10) miteinander verbinden, wobei der Deckel (20) zwischen den Zellverbindern (30) und Gehäusen der Batteriezellen (11) angeordnet ist.

8. Verfahren zur Herstellung eines Batteriezellenmoduls nach Anspruch 7, bei dem ein Deckel (20) auf die Seite von mehreren zu einem Block zusammengefassten Batteriezellen (10) im Wesentlichen abdichtend aufgesetzt wird, an der sich die Terminals (14) der Batteriezellen (10) befinden, so dass Terminals (14) der Batteriezellen (10) durch Löcher (27) im Deckel (20) hindurchführen, und danach Terminals (14) der Batteriezellen (10) mit Zellverbindern (30) verbunden werden.

9. Batterie, insbesondere Lithium-Ionen-Batterie, umfassend mehrere der Batteriezellenmodule (1) gemäß einem der Ansprüche 4 bis 7, wobei die Batteriezellenmodule (1) in einem Gesamtgehäuse angeordnet sind und Auslassöffnungen (23) der Batteriezellenmodule (1) strömungstechnisch mit einer Entgasungsleitung verbunden sind, die an einen Gasauslass im Gesamtgehäuse (11) angeschlossen ist.

10. Kraftfahrzeug mit einem Batteriezellenmodul nach einem der Ansprüche 1 bis 7 oder mit einer Batterie nach Anspruch 9, wobei das Batteriezellenmodul bzw. die Batterie mit einem Antriebssystem des Kraftfahrzeuges verbunden ist.

## Claims

1. Battery cell module, which comprises a plurality of battery cells (10), in particular lithium-ion battery cells, which each have a degassing opening (13), and a cover (20), which is connected to a surface of each of the battery cells (10), substantially forming a seal, and which comprises a gas receiving space (21) for at least temporarily receiving gas escaping from the battery cells (10), the gas receiving space (21) being open in the direction of the battery cells (10), wherein the opening area (22) of the gas receiving space (21) extends over a plurality of battery cells (10), **characterized in that** the battery cells (10) are positioned and fixed together solely by means of clamping straps (40).

2. Battery cell module according to Claim 1, in which the cover (20) is of single-wall design, the gas receiving space (21) in the cover (20) being formed by an in part substantially concave design.

3. Battery cell module according to one of Claims 1 and 2, in which the surface spanned by the opening area (22) corresponds to the area of the projection of the gas receiving space (21) onto the surfaces of the battery cells (10) overlain by the cover (20).

4. Battery cell module according to one of the preceding claims, in which the gas receiving space (21) has an outlet opening (23) for leading off the gas received.

5. Battery cell module according to one of the preceding claims, in which the battery cells (10) are contiguous with one another, or intermediate layers are arranged between the battery cells (10), so that a substantially uninterrupted surface of the battery cell module (1) is formed in the area of the battery cells (10), on which the sealing cover (20) rests.

6. Battery cell module according to one of the preceding claims, in which the cover (20) has a plurality of holes (27), through which the terminals (14) of the battery cells (10) are led, and profiled elements (28), which produce a profiling of the cover (20) between adjacent holes (27), are arranged on the side of the cover (20) remote from the battery cells (10) and between holes (27).

7. Battery cell module according to Claim 6, in which the battery cell module (1) comprises a plurality of cell connectors (30), which connect the terminals (14) of each two battery cells (10) together, the cover (20) being arranged between the cell connectors (30) and casings of the battery cells (11).

8. Method for producing a battery cell module according to Claim 7, in which a cover (20), substantially forming a seal, is mounted on that side of multiple battery cells (10), combined into a block, on which the terminals (14) of the battery cells (10) are situated, so that terminals (14) of the battery cells (10) pass through holes (27) in the cover (20) and terminals (14) of the battery cells (10) are then connected by cell connectors (30).

9. Battery, in particular a lithium-ion battery, comprising a plurality of the battery cell modules (1) according to one of Claims 4 to 7, the battery cell modules (1) being arranged in an overall casing and outlet openings (23) of the battery cell modules (1) being flow-connected to a degassing line, which is connected to a gas outlet in the overall casing (11).

10. Motor vehicle having a battery cell module according to one of Claims 1 to 7 or having a battery according to Claim 9, the battery cell module or the battery being connected to a propulsion system of the motor vehicle.

## Revendications

1. Module d'éléments de batterie, comprenant une pluralité d'éléments de batterie (10), en particulier d'éléments de batterie au lithium-ion, qui présentent chacun un évent de dégazage (13), et un couvercle (20) lié, sensiblement de manière étanche, avec une face respective des éléments de batterie (10), qui présente un espace de réception de gaz (21) pour recevoir au moins temporairement un gaz évacué des éléments de batterie (10), dans lequel l'espace de réception de gaz (21) est ouvert en direction des éléments de batterie (10), dans lequel
la zone d'ouverture (22) de l'espace de réception de gaz (21) s'étend sur plusieurs éléments de batterie (10), **caractérisé en ce que**
les éléments de batterie (10) sont positionnés et fixés les uns aux autres uniquement au moyen de bandes de filature (40).

2. Module d'éléments de batterie selon la revendication 1, dans lequel le couvercle (20) est réalisé avec une seule paroi, dans lequel l'espace de réception de gaz (21) est réalisé dans le couvercle (20) par une configuration sensiblement concave par zones.

3. Module d'éléments de batterie selon l'une des revendications 1 et 2, dans lequel la surface couverte par la zone d'ouverture (22) correspond à la zone de projection de l'espace de réception de gaz (21) sur les faces des éléments de batterie (10) sur lesquelles se superpose le couvercle (20).

4. Module d'éléments de batterie selon l'une des revendications précédentes, dans lequel l'espace de réception de gaz (21) présente une ouverture de sortie (23) pour l'évacuation du gaz reçu.

5. Module d'éléments de batterie selon l'une des revendications précédentes, dans lequel les éléments de batterie (10) sont en appui les uns contre les autres ou des couches intermédiaires sont disposées entre les éléments de batterie (10), de manière à former dans la zone des éléments de batterie (10) une surface sensiblement ininterrompue du module d'éléments de batterie (1), sur laquelle le couvercle (20) repose de manière étanche.

6. Module d'éléments de batterie selon l'une des revendications précédentes, dans lequel le couvercle (20) présente une pluralité de orifices (27) à travers lesquels sont amenées à passer les bornes (14) des éléments de batterie (10), et des éléments formant profil (28), qui confèrent un profil au couvercle (20) entre des orifices (27) voisins, sont disposés sur la face du couvercle (20) qui est tournée à l'opposé des éléments de batterie (10) et entre les orifices (27).

7. Module d'éléments de batterie selon la revendication 6, dans lequel le module d'éléments de batterie (1) comprend une pluralité de connecteurs d'éléments (30) qui relient entre elles les bornes (14) de deux éléments de batterie (10) respectifs, dans lequel le couvercle (20) est disposé entre les connecteurs d'éléments (30) et des boîtiers des éléments de batterie (11) .

8. Procédé de production d'un module d'éléments de batterie selon la revendication 7, dans lequel un couvercle (20) est placé sensiblement de manière étanche sur la face de plusieurs éléments de batterie (10) qui sont combinés en un bloc et sur laquelle sont situées les bornes (14) des éléments de batterie (10), afin que des bornes (14) des éléments de batterie (10) passent à travers des orifices (27) ménagés dans le couvercle (20), et que des bornes (14) des éléments de batterie (10) soient ensuite reliées à des connecteurs d'éléments (30).

9. Batterie, en particulier batterie au lithium-ion, comprenant plusieurs des modules d'éléments de batterie (1) selon l'une des revendications 4 à 7, dans lequel les modules d'éléments de batterie (1) sont disposés dans un boîtier principal et des ouvertures de sortie (23) des modules d'éléments de batterie (1) sont reliées par écoulement à une conduite de dégazage qui est raccordée à une sortie de gaz dans le boîtier principal (11) .

10. Véhicule à moteur équipé d'un module d'éléments de batterie selon l'une des revendications 1 à 7 ou d'une batterie selon la revendication 9, dans lequel le module d'éléments de batterie ou la batterie est relié à un système d'entraînement du véhicule à moteur.
